# EUROPEAN PATENT APPLICATION

(11) **EP 4 475 023 A1**
(43) Date of publication of application: **11.12.2024**
(21) Application number: 23765782.0
(22) Date of filing: 21.02.2023
(51) Int. Cl.: G06F 21/60

(54) **ARTIFICIAL INTELLIGENCE (AI) CONTROL APPARATUS AND ACCELERATION METHOD**

(30) Priority: 09.03.2022 CN 202210236069
(71) Applicant: Huawei Technologies Co., Ltd., Shenzhen, Guangdong 518129 (CN)
(72) Inventor: WANG, Tao, Shenzhen, Guangdong 518129 (CN)
(74) Representative: Pfenning, Meinig & Partner mbB
(86) International application number: PCT/CN2023/077342
(87) International publication number: WO 2023/169204

(57) **Abstract**

This application discloses an artificial intelligence AI control apparatus and an acceleration method. The AI control apparatus includes an AI controller and an interface circuit. The AI controller is configured to configure N acceleration units in an AI accelerator as at least a first-type acceleration unit and a second-type acceleration unit, where a security level of the first-type acceleration unit is higher than a security level of the second-type acceleration unit. The AI controller is further configured to: receive, through the interface circuit, a first-type task delivered by a processor in a first execution environment, and distribute the first-type task to the first-type acceleration unit; and receive a second-type task delivered by the processor in a second execution environment, and distribute the second-type task to the second-type acceleration unit, where a security level of the first-type task is higher than a security level of the second-type task. According to this application, tasks of different security levels can be simultaneously run on one AI acceleration chip, and hardware-level isolation is provided for the tasks of different security levels.

## Description

This application claims priority to Chinese Patent Application No. 202210236069.9, filed with the China National Intellectual Property Administration on March 9, 2022 and entitled "ARTIFICIAL INTELLIGENCE AI CONTROL APPARATUS AND ACCELERATION METHOD", which is incorporated herein by reference in its entirety.

### TECHNICAL FIELD

This application relates to the field of semiconductor technologies, and in particular, to an artificial intelligence AI control apparatus and an acceleration method.

### BACKGROUND

With the popularization of artificial intelligence (Artificial Intelligence, AI) applications, the AI applications not only provide convenience for users, but also bring new challenges to data protection during computing. To accelerate an AI computing, the AI application usually uses a heterogeneous system, that is, performs logic operations on a central processing unit (Central Processing Unit, CPU), and performs AI computings on a graphics processing unit (Graphics Processing Unit, GPU) or a neural network processing unit (Neural network Processing Unit, NPU).

Currently, the CPU has mature isolation technologies including TrustZone, Intel's Software Guard Extensions (Software Guard Extensions, SGX), and the like. For example, tasks of different security levels are run in execution environments of different security levels to protect security of operations in the CPU. In this case, a task with a high security level is not accessed by a task with another security level.

However, tasks of different security levels cannot be isolated during operations on an accelerator (including at least one GPU and/or at least one NPU). In other words, to ensure security of the tasks at a current stage, computing tasks of different security levels cannot be simultaneously run on the accelerator.

### SUMMARY

Embodiments of this application provide an artificial intelligence AI control apparatus and an acceleration method, to simultaneously run tasks of different security levels on one AI acceleration chip, and provide hardware-level isolation for the tasks of different security levels.

According to a first aspect, this application provides an artificial intelligence AI control apparatus. The AI control apparatus includes an AI controller and an interface circuit. The AI controller is configured to configure N acceleration units in an AI accelerator as at least a first-type acceleration unit and a second-type acceleration unit, where a security level of the first-type acceleration unit is higher than a security level of the second-type acceleration unit, and N is a positive integer greater than or equal to 2. The AI controller is further configured to: receive, through the interface circuit, a first-type task delivered by a processor in a first execution environment, and distribute the first-type task to the first-type acceleration unit; and receive a second-type task delivered by the processor in a second execution environment, and distribute the second-type task to the second-type acceleration unit, where a security level of the first-type task is higher than a security level of the second-type task.

In terms of technical effects, in a scenario of accelerating an AI computing, after the processor separately delivers tasks (namely, the first-type task and the second-type task) of different security levels in different execution environments, the newly added AI controller in this application distributes the tasks to the acceleration units of corresponding security levels based on the security levels of the tasks, and finally the acceleration units of different security levels respectively process the tasks of corresponding security levels. A task delivery process in the processor, a task distribution process in the AI controller, and a task execution process in the AI accelerator are performed independently. In other words, each of the processor, the AI controller, and the AI accelerator has a respective isolation mechanism for the tasks of different security levels. However, in a scenario of accelerating an AI computing in the conventional technology, acceleration units in an accelerator are not classified, and distribution processes of tasks of different security levels are not completely isolated. To ensure security in task execution processes, the tasks of different security levels cannot be distributed to one accelerator. In other words, compared with the conventional technology, in this application, the tasks of different security levels can be simultaneously executed in one accelerator while security in the task execution processes is ensured, thereby effectively ensuring security of a task (for example, a sensitive data processing task) with a high security level in an execution process. In addition, in the case that a quantity of tasks is small, the tasks of different security levels are simultaneously executed in one accelerator, so that an acceleration unit in the accelerator can be fully used, thereby avoiding a waiting process of a task with another security level when the accelerator can process only a task with one security level each time, and improving acceleration performance of the accelerator.

In a feasible implementation, the AI controller is specifically configured to: receive a configuration instruction delivered by the processor, where the configuration instruction includes a security identifier and configuration information; and configure the N acceleration units as at least the first-type acceleration unit and the second-type acceleration unit based on the configuration information when the security identifier indicates that the configuration instruction is delivered by the processor in the first execution environment.

In terms of technical effects, a security level of the configuration information in the configuration instruction is identified based on the security identifier, to ensure that the AI controller can configure the acceleration units in the accelerator only in the first execution environment (for example, a TEE) with a higher security level, and the AI controller is not allowed to configure the acceleration units in the accelerator in the second execution environment (for example, an REE) with a lower security level, thereby improving security of an accelerator configuration process and avoiding tampering.

In a feasible implementation, the security identifier may be represented by a non-security bit (Non-security bit, NS bit). For example, when the security identifier is set to 0, it indicates that the configuration instruction is delivered by the processor 110 in the first execution environment; or when the security identifier is set to 1, it indicates that the configuration instruction is delivered by the processor 110 in the second execution environment.

In a feasible implementation, the AI controller is specifically configured to: read a first identifier carried in the first-type task, and deliver the first-type task to the first-type acceleration unit based on the first identifier; and read a second identifier carried in the second-type task, and deliver the second-type task to the second-type acceleration unit based on the second identifier. The first identifier indicates the security level of the first-type task, and the second identifier indicates the security level of the second-type task.

In terms of technical effects, the AI controller identifies a security level of each task based on an identifier carried in the task, and then distributes the task to an acceleration unit of a corresponding security level. The acceleration unit only passively receives a task delivered by the controller. Therefore, according to distribution logic, the controller may distribute the first-type task to the first-type acceleration unit, and distribute the second-type task to the second-type acceleration unit, to isolate an execution process of the first-type task from an execution process of the second-type task, thereby ensuring security of the tasks of different security levels in execution processes. To be specific, this application may provide hardware-level isolation for the tasks of different security levels that are simultaneously executed in a same accelerator.

In a feasible implementation, the first identifier and the second identifier may be represented by a non-security bit (Non-security bit, NS bit). For example, the first identifier is 0, and the second identifier is 1.

In a feasible implementation, the AI control apparatus, the processor, and the AI accelerator are integrated into a same system-on-chip SoC, the AI control apparatus and the processor are connected through a bus, and the AI control apparatus and the AI accelerator are connected through a bus.

In terms of technical effects, in this application, the AI control apparatus, the processor, and the AI accelerator are integrated into one SoC. Compared with the conventional technology in which a host system and an accelerator are interconnected over an open network, frequent encryption and decryption do not need to be performed on data transmission between the CPU and the accelerator, and communication performance between the processor and the accelerator can be effectively improved.

In a feasible implementation, the AI controller is specifically configured to: receive, through the bus, the first-type task and the second-type task that are delivered by the processor; and distribute the first-type task to the first-type acceleration unit and distribute the second-type task to the second-type acceleration unit through the bus.

It should be understood that the bus between the processor and the AI control apparatus and the bus between the AI accelerator and the AI control apparatus may be one bus or two independent buses. This is not limited in this application.

In terms of technical effects, in this application, the processor, the AI control apparatus, and the AI accelerator are integrated into a semiconductor chip. Compared with the conventional technology in which a communication manner in which an open interconnection network is used, communication overheads between hardware modules can be effectively reduced. In addition, communication between the processor and the AI control apparatus and communication between the AI control apparatus and the AI accelerator are implemented respectively through the two independent buses, so that a process in which the processor bypasses the AI control apparatus and directly controls the AI accelerator to execute an acceleration task can be avoided. To be specific, in this case, the task delivered by the processor needs to be distributed to the acceleration unit in the AI accelerator according to the task distribution logic of the AI control apparatus. It can be learned from the foregoing embodiment that the tasks of different security levels in execution processes in the AI accelerator can be effectively isolated.

In a feasible implementation, the AI controller is further configured to: configure a first storage area and a second storage area in a memory, where the first storage area is used to store computing data corresponding to the first-type task, and the second storage area is used to store computing data corresponding to the second-type task.

It should be understood that a security level of the first storage area is higher than that of the second storage area.

In terms of technical effects, computing data corresponding to the tasks of different security levels is stored in secure areas of different levels in the memory, so that data access processes of different security levels can be isolated from each other when the tasks of different security levels are executed. This avoids accessing data corresponding to a task with a high security level when the second-type task with a low security level is executed, thereby ensuring data security.

In a feasible implementation, the AI control apparatus, the memory, the AI accelerator, and the processor are integrated into the same system-on-chip SoC.

In terms of technical effects, the memory, the AI control apparatus, the processor, and the AI accelerator are integrated into one SoC, so that communication overheads between hardware modules can be effectively reduced.

In a feasible implementation, the memory, the AI control apparatus, the processor, and the AI accelerator are connected through one bus; or the memory, the AI control apparatus, and the processor are connected through a first bus, and the memory, the AI control apparatus, and the AI accelerator are connected through a second bus.

In terms of technical effects, the memory is separately connected to the processor and the AI accelerator through the two buses, so that the processor and the AI accelerator access the memory through independent physical links. In this way, physical isolation between the processor and the AI accelerator is further ensured, and the processor does not directly control AI accelerator, so as to implement task distribution logic of the AI control apparatus for the AI accelerator, and isolation of the tasks of different security levels in execution processes in the AI accelerator.

In a feasible implementation, the first storage area includes a first task queue, and the second storage area includes a second task queue; and the AI controller is further configured to: store the first-type task in the first task queue based on receiving time of the first-type task, and store the second-type task in the second task queue based on receiving time of the second-type task. A first-type task with earlier receiving time is ranked higher in the first task queue, and is distributed to the first-type acceleration unit earlier, and a second-type task with earlier receiving time is ranked higher in the second task queue, and is distributed to the second-type acceleration unit earlier.

In terms of technical effects, based on a security level of a task, the first task queue and the second task queue are maintained respectively in the first storage area and the second storage area, to implement isolation of delivery processes of the tasks of different security levels. In addition, a task is delivered based on queues. The task may be distributed when an acceleration unit is idle, and the task is stored in a queue when no acceleration unit is idle. This uses a computing capability of each acceleration unit to a maximum extent, thereby improving computing performance.

In a feasible implementation, the controller is specifically configured to: configure M acceleration units in the N acceleration units as the first-type acceleration unit, and configure remaining acceleration units in the N acceleration units other than the M acceleration units as the second-type acceleration unit, where M is a positive integer less than or equal to N.

In terms of technical effects, in this application, a quantity of first-type acceleration units with high security levels and a quantity of second-type acceleration units with low security levels may be dynamically configured, to meet computing capability requirements of computing tasks of different security levels in different AI acceleration tasks, and flexibility is high.

In a feasible implementation, the first-type task includes a first task, the second-type task includes a second task, the first task corresponds to a first virtual address, and the second task corresponds to a second virtual address; the first-type acceleration unit is configured to perform data access to the first storage area based on the first virtual address and a first page table; and the second-type acceleration unit is configured to perform data access to the second storage area based on the second virtual address and a second page table.

In terms of technical effects, when access data is performed based on a virtual address, two different sets of page tables are set for the first-type task and the second-type task that have different security levels, to implement isolation in data access processes. Therefore, computing data corresponding to the first-type task is not accessed by the second-type task when a same set of page tables is used.

In a feasible implementation, the first-type task includes a first task, the second-type task includes a second task, the first task corresponds to a first physical address, and the second task corresponds to a second physical address; when the first physical address is located in the first storage area, the first-type acceleration unit has permission to access the first storage area; and when the second physical address is located in the second storage area, the second-type acceleration unit has permission to access the second storage area.

In terms of technical effects, when data access is performed based on a physical address, whether data access is allowed is determined by determining whether a security level of a storage area in which the physical address is located corresponds to a security level of an access task, so as to ensure that only the first storage area is accessed in an execution process of the first-type task, and only the second storage area is accessed in an execution process of the second-type task, thereby implementing isolation of the access processes when data access is performed based on the physical address.

In a feasible implementation, the N acceleration units include a third acceleration unit; and when the third acceleration unit is configured as the second-type acceleration unit from the first-type acceleration unit, or is configured as the first-type acceleration unit from the second-type acceleration unit, data cached in the third acceleration unit is cleared.

The third acceleration unit is any acceleration unit in the accelerator.

In terms of technical effects, when a security level of an acceleration unit changes in a configuration process, data cached in the acceleration unit in a process of executing a computing task last time is cleared in a timely manner, to ensure data security.

In a feasible implementation, each acceleration unit in the AI accelerator may include at least one arithmetic logic unit ALU and at least one storage unit. The at least one storage unit is a readable and writable storage unit, for example, a register.

In a feasible implementation, the first execution environment is a trusted execution environment TEE, and the second execution environment is a rich execution environment REE.

In terms of technical effects, the tasks of different security levels are isolated from each other in delivery processes by using mature TEE and REE technologies in the processor, thereby providing a basis for isolating subsequent distribution processes of the tasks of different security levels by the controller.

According to a second aspect, an embodiment of this application provides a system-on-chip. The system-on-chip includes a processor, an AI controller, and an AI accelerator. The AI controller is configured to configure N acceleration units in the AI accelerator as at least a first-type acceleration unit and a second-type acceleration unit, where a security level of the first-type acceleration unit is higher than a security level of the second-type acceleration unit, and N is a positive integer greater than or equal to 2. The AI controller is further configured to: receive a first-type task delivered by the processor in a first execution environment, and distribute the first-type task to the first-type acceleration unit; and receive a second-type task delivered by the processor in a second execution environment, and distribute the second-type task to the second-type acceleration unit. A security level of the first-type task is higher than a security level of the second-type task.

In a feasible implementation, the AI controller is specifically configured to: receive a configuration instruction delivered by the processor, where the configuration instruction includes a security identifier and configuration information; and configure the N acceleration units as at least the first-type acceleration unit and the second-type acceleration unit based on the configuration information when the security identifier indicates that the configuration instruction is delivered by the processor in the first execution environment.

In a feasible implementation, the AI controller is specifically configured to: read a first identifier carried in the first-type task, and deliver the first-type task to the first-type acceleration unit based on the first identifier; and read a second identifier carried in the second-type task, and deliver the second-type task to the second-type acceleration unit based on the second identifier. The first identifier indicates the security level of the first-type task, and the second identifier indicates the security level of the second-type task.

In a feasible implementation, the AI controller and the processor are connected through a bus, and the AI controller and the AI accelerator are connected through a bus.

In a feasible implementation, the AI controller is specifically configured to: receive, through the bus, the first-type task and the second-type task that are delivered by the processor; and distribute the first-type task to the first-type acceleration unit and distribute the second-type task to the second-type acceleration unit through the bus.

In a feasible implementation, the AI controller is further configured to: configure a first storage area and a second storage area in a memory, where the first storage area is used to store computing data corresponding to the first-type task, and the second storage area is used to store computing data corresponding to the second-type task.

In a feasible implementation, the memory is integrated into the system-on-chip. The memory, the AI controller, the processor, and the AI accelerator are connected through one bus; or the memory, the AI controller, and the processor are connected through a first bus, and the memory, the AI controller, and the AI accelerator are connected through a second bus.

In a feasible implementation, the first storage area includes a first task queue, and the second storage area includes a second task queue; and the AI controller is further configured to: store the first-type task in the first task queue based on receiving time of the first-type task, and store the second-type task in the second task queue based on receiving time of the second-type task. A first-type task with earlier receiving time is ranked higher in the first task queue, and is distributed to the first-type acceleration unit earlier, and a second-type task with earlier receiving time is ranked higher in the second task queue, and is distributed to the second-type acceleration unit earlier.

In a feasible implementation, the first-type task includes a first task, the second-type task includes a second task, the first task corresponds to a first virtual address, and the second task corresponds to a second virtual address; the first-type acceleration unit is configured to perform data access to the first storage area based on the first virtual address and a first page table; and the second-type acceleration unit is configured to perform data access to the second storage area based on the second virtual address and a second page table.

In a feasible implementation, the first-type task includes a first task, the second-type task includes a second task, the first task corresponds to a first physical address, and the second task corresponds to a second physical address; when the first physical address is located in the first storage area, the first-type acceleration unit has permission to access the first storage area; and when the second physical address is located in the second storage area, the second-type acceleration unit has permission to access the second storage area.

In a feasible implementation, the N acceleration units include a third acceleration unit; and when the third acceleration unit is configured as the second-type acceleration unit from the first-type acceleration unit, or is configured as the first-type acceleration unit from the second-type acceleration unit, data cached in the third acceleration unit is cleared.

In a feasible implementation, the first execution environment is a trusted execution environment TEE, and the second execution environment is a rich execution environment REE.

According to a third aspect, an embodiment of this application provides an artificial intelligence AI acceleration method. The method includes: An AI controller configures N acceleration units in an AI accelerator as at least a first-type acceleration unit and a second-type acceleration unit, where a security level of the first-type acceleration unit is higher than a security level of the second-type acceleration unit, and N is a positive integer greater than or equal to 2. The AI controller receives a first-type task delivered by a processor in a first execution environment, and distributes the first-type task to the first-type acceleration unit; and receives a second-type task delivered by the processor in a second execution environment, and distributes the second-type task to the second-type acceleration unit. A security level of the first-type task is higher than a security level of the second-type task.

In a feasible implementation, that an AI controller configures N acceleration units in an AI accelerator as at least a first-type acceleration unit and a second-type acceleration unit includes: The AI controller receives a configuration instruction delivered by the processor, where the configuration instruction includes a security identifier and configuration information; and configures the N acceleration units as at least the first-type acceleration unit and the second-type acceleration unit based on the configuration information when the security identifier indicates that the configuration instruction is delivered by the processor in the first execution environment.

In a feasible implementation, the distributing the first-type task to the first-type acceleration unit includes: The AI controller reads a first identifier carried in the first-type task, and delivers the first-type task to the first-type acceleration unit based on the first identifier. The distributing the second-type task to the second-type acceleration unit includes: The AI controller reads a second identifier carried in the second-type task, and delivers the second-type task to the second-type acceleration unit based on the second identifier. The first identifier indicates the security level of the first-type task, and the second identifier indicates the security level of the second-type task.

In a feasible implementation, the AI controller, the processor, and the AI accelerator are integrated into a same system-on-chip SoC, the AI controller and the processor are connected through a bus, and the AI controller and the AI accelerator are connected through a bus.

In a feasible implementation, that the AI controller receives a first-type task delivered by a processor in a first execution environment, and distributes the first-type task to the first-type acceleration unit; and receives a second-type task delivered by the processor in a second execution environment, and distributes the second-type task to the second-type acceleration unit includes: The AI controller receives, through the bus, the first-type task and the second-type task that are delivered by the processor; and distributes the first-type task to the first-type acceleration unit and distributes the second-type task to the second-type acceleration unit through the bus.

In a feasible implementation, the method further includes: The AI controller configures a first storage area and a second storage area in a memory, where the first storage area is used to store computing data corresponding to the first-type task, and the second storage area is used to store computing data corresponding to the second-type task.

In a feasible implementation, the AI controller, the memory, the AI accelerator, and the processor are integrated into the same system-on-chip SoC.

In a feasible implementation, the memory, the AI controller, the processor, and the AI accelerator are connected through one bus; or the memory, the AI controller, and the processor are connected through a first bus, and the memory, the AI controller, and the AI accelerator are connected through a second bus.

In a feasible implementation, the first storage area includes a first task queue, and the second storage area includes a second task queue; and the method further includes: The AI controller stores the first-type task in the first task queue based on receiving time of the first-type task, and stores the second-type task in the second task queue based on receiving time of the second-type task. A first-type task with earlier receiving time is ranked higher in the first task queue, and is distributed to the first-type acceleration unit earlier, and a second-type task with earlier receiving time is ranked higher in the second task queue, and is distributed to the second-type acceleration unit earlier.

In a feasible implementation, the first-type task includes a first task, the second-type task includes a second task, the first task corresponds to a first virtual address, and the second task corresponds to a second virtual address; the first-type acceleration unit performs data access to the first storage area based on the first virtual address and a first page table; and the second-type acceleration unit performs data access to the second storage area based on the second virtual address and a second page table.

In a feasible implementation, the first-type task includes a first task, the second-type task includes a second task, the first task corresponds to a first physical address, and the second task corresponds to a second physical address; when the first physical address is located in the first storage area, the first-type acceleration unit is allowed to access the first storage area; and when the second physical address is located in the second storage area, the second-type acceleration unit is allowed to access the second storage area.

In a feasible implementation, the N acceleration units include a third acceleration unit; and when the third acceleration unit is configured as the second-type acceleration unit from the first-type acceleration unit, or is configured as the first-type acceleration unit from the second-type acceleration unit, data cached in the third acceleration unit is cleared.

In a feasible implementation, the first execution environment is a trusted execution environment TEE, and the second execution environment is a rich execution environment REE.

According to a fourth aspect, an embodiment of this application provides a computer device, where the computer device includes at least one processor and an interface circuit; and the at least one processor is configured to invoke instructions stored in a memory, to perform the method according to any one of the feasible implementations of the third aspect.

According to a fifth aspect, an embodiment of this application provides a computer-readable storage medium. The computer-readable storage medium stores a computer program. When the computer program is executed, the method according to any one of the feasible implementations of the third aspect is implemented.

According to a sixth aspect, an embodiment of this application provides a computer program. The computer program includes instructions. When the computer program is executed, the method according to any one of the feasible implementations of the third aspect is implemented.

### BRIEF DESCRIPTION OF DRAWINGS

The following describes accompanying drawings used in embodiments of this application.
FIG. 1a and FIG. 1b are diagrams of structures of an AI acceleration apparatus according to an embodiment of this application;
FIG. 2 is a schematic flowchart of executing an AI acceleration task according to an embodiment of this application;
FIG. 3a and FIG. 3b are diagrams of structures of another AI acceleration apparatus according to an embodiment of this application;
FIG. 4 is a diagram of a process in which an acceleration unit accesses a memory according to an embodiment of this application;
FIG. 5 is a diagram of a structure of an AI accelerator according to an embodiment of this application;
FIG. 6 shows a specific example of a task execution process of an AI acceleration apparatus according to an embodiment of this application;
FIG. 7 is a diagram of a structure of an AI control apparatus according to an embodiment of this application;
FIG. 8a and FIG. 8b are diagrams of structures of two systems-on-chip according to an embodiment of this application; and
FIG. 9 is a schematic flowchart of an AI acceleration method according to an embodiment of this application.

### DESCRIPTION OF EMBODIMENTS

The following describes embodiments of this application with reference to the accompanying drawings in embodiments of this application. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of' means two or more than two.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

The following describes technical terms in this application.
(1) A rich execution environment (Rich execution environment, REE): Is generally used to run operating systems with rich functions such as Android, iOS, and Linux, and a program running on the operating system is referred to as a client application (Client Application, CA). The REE is characterized by providing system security through the operating system: (1) application isolation: each application can access only its own data; (2) permission management: a common user and an application are restricted to accessing system data; (3) universality and feature richness: but both an application and an operating system may introduce vulnerabilities; and (4) openness and extensibility. In the REE, because operating system (Operating System, OS) code is extremely large and complex, there are usually system vulnerabilities. In addition, the REE is typically distinguished from a platform technology that can support a fully trusted execution environment TEE, security-aware applications and security services.
(2) A trusted execution environment (Trusted execution environment, TEE): Is a secure zone separated from a rich execution environment REE. The TEE includes a trusted application (Trusted Application, TA) and a trusted operating system (Trusted OS, Trusted Operating System). The TEE is separated from the rich execution environment REE and applications in the rich execution environment, to ensure that various sensitive data is stored, processed, and protected in a trusted environment. In addition, the trusted execution environment provides a secure execution environment for the trusted application TA loaded in the trusted execution environment. The TEE provides hardware-level protection and security isolation for peripheral hardware resources. When a CPU is in an REE state, any application cannot access a secure hardware device, or a memory, a cache (Cache), or another peripheral secure hardware device that is in a secure state. Currently, mature technologies that can implement the TEE and the REE on the CPU include ARM's TrustZone, Intel's SGX, a virtualization (Virtualization) technology on a MIPS (Microprocessor Without Interlocked Pipelined Stages Architecture) architecture, an AMD's PSP (Platform Security Processor), and the like.
(3) An accelerator: Hardware configured to accelerate AI computing. The accelerator may include a graphics processing unit (Graphics Processing Unit, GPU) and/or a neural network processing unit (Neural network Processing Unit, NPU). Each GPU or NPU includes at least one acceleration unit (accelerator). Each acceleration unit includes hardware modules such as an arithmetic logic unit (Arithmetic logic Unit, ALU) and a register. Based on application scenarios corresponding to tasks processed by acceleration units, the acceleration units may be classified into a matrix operation acceleration unit, a vector computation acceleration unit, an image preprocessing acceleration unit, and the like.

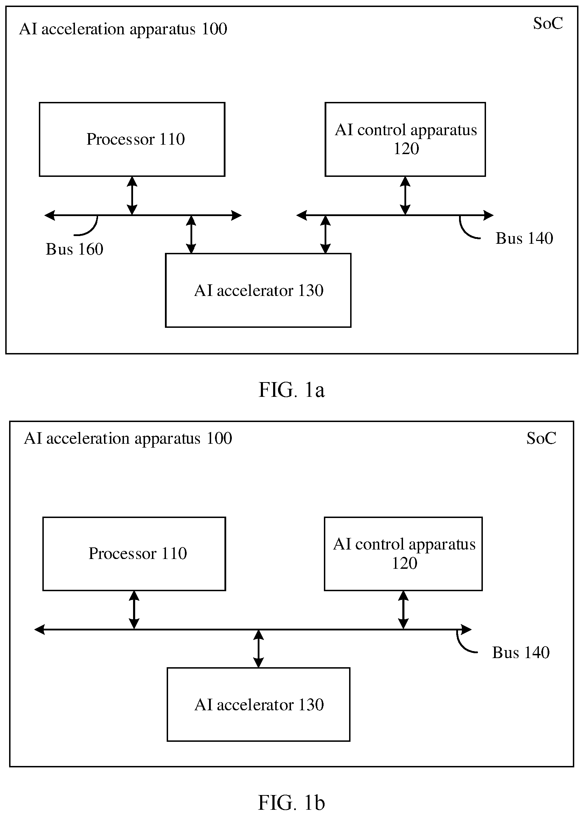

FIG. 1a and FIG. 1b are diagrams of structures of an AI acceleration apparatus according to an embodiment of this application. As shown in FIG. 1a, an Al acceleration apparatus 100 includes a processor 110, an AI control apparatus 120, an AI accelerator 130, a bus 140, and a bus 160. The processor 110, the AI control apparatus 120, and the AI accelerator 130 are integrated into a semiconductor chip, to serve as a system-on-chip (System-on-Chip, SoC). The processor 110 and the AI control apparatus 120 are connected through the bus 160, the AI control apparatus 120 and the AI accelerator 130 are connected through the bus 140, and the bus 160 and the bus 140 are two independent buses.

After an AI computing task is delivered to the AI acceleration apparatus 100, the processor 110 first decomposes the AI computing task into at least two types of tasks of different security levels (namely, a first-type task and a second-type task in the following embodiments). The tasks of different security levels obtained through decomposing are delivered to the AI control apparatus 120 through the bus 160. Then, the AI control apparatus 120 delivers the tasks of different security levels to acceleration units (namely, a first-type acceleration unit and a second-type acceleration unit in the following embodiments) of corresponding security levels in the AI accelerator 130 through the bus 140, so that the tasks of different security levels are simultaneously executed in one AI accelerator.

This application may be applied to a plurality of scenarios with security requirements. For example, in a fingerprint-based unlocking task, input is a user fingerprint, and output is a result of whether the user fingerprint matches a fingerprint in a fingerprint library. In this scenario, the processor 110 decomposes the fingerprint-based unlocking task into subtasks of different security levels: (1) preprocessing of the input, namely, the user fingerprint, with no need to perform security processing (corresponding to the second-type task in the following embodiments); and (2) a fingerprint library scheduling computing task and a task of comparing a preprocessed fingerprint with the fingerprint in the fingerprint library that require security processing (corresponding to the first-type task in the following embodiments). Then, the AI control apparatus 120 delivers the tasks of different security levels to acceleration units (corresponding to the first-type acceleration unit and the second-type acceleration unit in the following embodiments) of corresponding security levels in the AI accelerator 130 for task processing.

FIG. 1b is a diagram of another connection manner among a processor 110, an AI control apparatus 120, and an AI accelerator 130. In an AI acceleration apparatus 100 shown in FIG. 1b, the processor 110, the AI control apparatus 120, and the AI accelerator 130 are connected through a bus 140. In addition, a task execution process of the AI acceleration apparatus 100 shown in FIG. 1b is the same as that of the AI acceleration apparatus shown in FIG. 1a. Therefore, details are not described again. It should be understood that the AI control apparatus 120 in FIG. 1a and FIG. 1b may include an AI controller and an interface circuit. In an optional case, if there is no interface circuit in the AI control apparatus 120, the AI control apparatus may be considered to be equivalent to the AI controller.

In terms of technical effects, the connection manner shown in FIG. 1a is used, that is, communication between the processor and the AI control apparatus and communication between the AI control apparatus and the AI accelerator are implemented respectively through the two independent buses, so that a process in which the processor bypasses the AI control apparatus and directly controls the AI accelerator to execute an acceleration task can be avoided. To be specific, in this case, the task delivered by the processor needs to be distributed to the acceleration unit in the AI accelerator according to task distribution logic of the AI control apparatus, so that the tasks of different security levels are distributed to acceleration units of corresponding security levels, and execution processes of the tasks of different security levels are isolated.

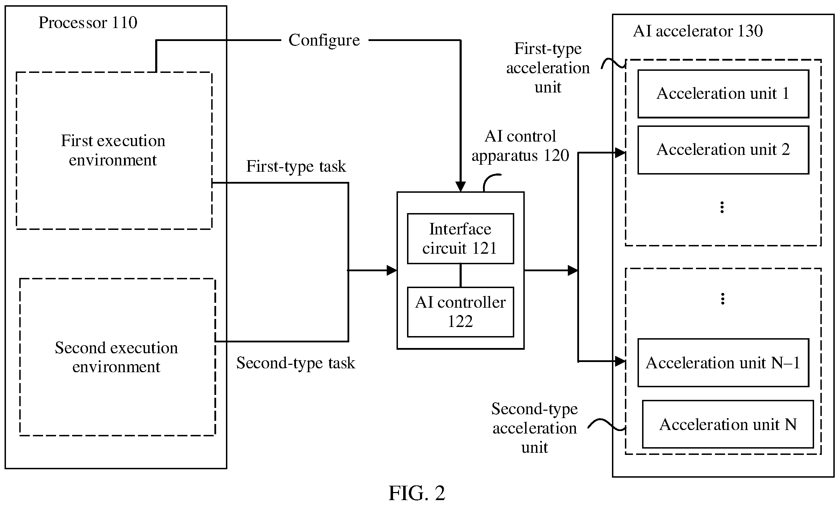

FIG. 2 is a schematic flowchart of executing an AI acceleration task according to an embodiment of this application. FIG. 2 is used to describe a specific task execution process of the AI acceleration apparatus 100 in FIG. 1a and FIG. 1b, and is also used as a supplement to a software architecture and a hardware structure of the AI acceleration apparatus 100. As shown in FIG. 2, the AI accelerator 130 includes N acceleration units, where N is a positive integer greater than or equal to 2; and the AI control apparatus 120 includes an interface circuit 121 and an AI controller 122.

The AI controller 122 is configured to configure the N acceleration units in the AI accelerator 130 as at least a first-type acceleration unit and a second-type acceleration unit, where a security level of the first-type acceleration unit is higher than a security level of the second-type acceleration unit, and N is the positive integer greater than or equal to 2. The AI controller 122 is further configured to: receive, through the interface circuit, a first-type task delivered by the processor 110 in a first execution environment, and distribute the first-type task to the first-type acceleration unit; and receive a second-type task delivered by the processor 110 in a second execution environment, and distribute the second-type task to the second-type acceleration unit. A security level of the first-type task is higher than a security level of the second-type task.

The first execution environment and the second execution environment are two execution environments that are used in the processor 110 via time-multiplexed sharing. At a same moment, the processor 110 runs in the first execution environment or the second execution environment, that is, the first execution environment and the second execution environment cannot be run simultaneously on the processor 110. In terms of a software layer, an operating system and an application that are included in the first execution environment are independent of an operating system and an application that are included in the second execution environment, respectively. In terms of a hardware layer, the first execution environment and the second execution environment share hardware inside the processor 110. A process of switching between the first execution environment and the second execution environment on the processor 110 is as follows: It is assumed that the processor 110 currently runs in the first execution environment. Before switching is performed, the processor 110 first takes a snapshot of related data in the first execution environment and stores the snapshot in a storage unit inside the processor 110, then loads a snapshot of the second execution environment stored in the storage unit, and starts to run in the second execution environment. The first execution environment and the second execution environment are isolated from each other by using the foregoing process. A security level of the first execution environment is higher than that of the second execution environment, that is, the security level of the first-type task delivered in the first execution environment is higher than the security level of the second-type task delivered in the second execution environment.

In terms of technical effects, in this application, the AI controller classifies acceleration units in an accelerator into at least two different security levels, and then delivers tasks of different security levels received from the processor to acceleration units of corresponding security levels. In this way, acceleration tasks of different security levels are simultaneously executed in one accelerator, thereby improving acceleration performance of the accelerator. In addition, the tasks (namely, the first-type task and the second-type task) of different security levels are delivered by the processor in different execution environments, and the controller distributes the tasks of different security levels to acceleration units of corresponding security levels according to fixed distribution logic. To be specific, in a task delivery process from the processor to the controller and a task execution process in the accelerator, the tasks of different security levels are isolated from each other, so that acceleration units of different security levels are isolated from each other when the tasks of different security levels are simultaneously executed in the accelerator, to effectively ensure security of a high-level task in an execution process.

Optionally, the first execution environment is a trusted execution environment TEE, the second execution environment is a rich execution environment REE, and the REE and the TEE may be implemented in a plurality of ways (for example, TrustZone, SGX, and MIPS). Details are not described herein. In addition, the first execution environment and the second execution environment may alternatively be two other mutually isolated feasible environments. This is not limited in this application.

In terms of technical effects, the tasks of different security levels are isolated from each other in delivery processes by using mature TEE and REE technologies in the processor, thereby providing a basis for isolating subsequent distribution processes of the tasks of different security levels by the controller.

Optionally, the AI controller 122 is specifically configured to: receive a configuration instruction delivered by the processor 110, where the configuration instruction includes a security identifier and configuration information; and configure the N acceleration units as at least the first-type acceleration unit and the second-type acceleration unit based on the configuration information when the security identifier indicates that the configuration instruction is delivered by the processor 110 in the first execution environment.

In terms of technical effects, a security level of the configuration information in the configuration instruction is identified based on the security identifier, to ensure that a configuration process of the acceleration units in the accelerator is indicated by the configuration instruction with a high security level delivered in the first execution environment, thereby improving security of an accelerator configuration process and avoiding tampering.

Optionally, the security identifier may be represented by a non-security bit (Non-security bit, NS bit). For example, when the security identifier is set to 0, it indicates that the configuration instruction is delivered by the processor 110 in the first execution environment; or when the security identifier is set to 1, it indicates that the configuration instruction is delivered by the processor 110 in the second execution environment.

Optionally, the configuration information includes a quantity of types of different security levels, and a specific quantity of acceleration units included in total at each type of security level. For example, the N acceleration units are configured as three types of different security levels, and at least one acceleration unit is included at each type of security level.

Specifically, after receiving the configuration instruction delivered by the processor 110, the AI controller 122 first reads the security identifier in the configuration instruction, and identifies the security identifier. When the security identifier indicates that the configuration instruction is delivered by the processor 110 in the first execution environment, the AI controller 122 identifies that the configuration instruction is secure, and configures the N acceleration units in the AI accelerator 130 as at least the first-type acceleration unit and the second-type acceleration unit based on the configuration information in the configuration instruction. When the security identifier indicates that the configuration instruction is not delivered by the processor 110 in the first execution environment (for example, delivered by the processor 110 in the second execution environment), the AI controller 122 identifies that the configuration instruction is non-secure, and does not perform a configuration operation on the AI accelerator 130.

The configuration information is delivered in the first execution environment with a high security level, so that security of the configuration information can be ensured, and tampering can be avoided.

Optionally, that the AI controller 122 configures the N acceleration units in the AI accelerator 130 as at least the first-type acceleration unit and the second-type acceleration unit based on the configuration information in the configuration instruction is specifically as follows: The AI controller 122 configures the N acceleration units in the AI accelerator 130 as a plurality of types of different security levels based on the configuration information, for example, two types of different security levels, three types of different security levels, or five types of different security levels. At least one acceleration unit is included at each type of security level.

The configuration information may be set by a user depending on a specific AI application scenario.

Acceleration units with the plurality of types of different security levels include the first-type acceleration unit and the second-type acceleration unit. The security level of the first-type acceleration unit is higher than the security level of the second-type acceleration unit, and security levels of acceleration units included in each type of acceleration unit are the same.

For example, the AI controller 122 may configure the N acceleration units in the AI accelerator 130 as the first-type acceleration unit and the second-type acceleration unit based on the configuration information in the configuration instruction: configure M acceleration units in the N acceleration units as the first-type acceleration unit, and configure remaining acceleration units in the N acceleration units other than the M acceleration units as the second-type acceleration unit, where M is a positive integer less than or equal to N.

The processor 110 may be a central processing unit (CPU) or another processing core. A specific implementation solution of the processor is not described in this embodiment.

After the processor 110 indicates the AI controller 122 to configure the security level of the acceleration unit in the AI accelerator 130, the processor 110 delivers the first-type task to the AI controller 122 in the first execution environment, and delivers the second-type task to the AI controller 122 in the second execution environment. The security level of the first-type task is higher than the security level of the second-type task.

Optionally, the AI controller 122 is specifically configured to: read a first identifier carried in the first-type task, and deliver the first-type task to the first-type acceleration unit based on the first identifier; and read a second identifier carried in the second-type task, and deliver the second-type task to the second-type acceleration unit based on the second identifier. The first identifier indicates the security level of the first-type task, and the second identifier indicates the security level of the second-type task.

In terms of technical effects, the AI controller identifies a security level of each task based on an identifier carried in the task, and then distributes the task to an acceleration unit of a corresponding security level. The acceleration unit only passively receives a task delivered by the controller. Therefore, according to distribution logic, the controller may distribute the first-type task to the first-type acceleration unit, and distribute the second-type task to the second-type acceleration unit, to isolate an execution process of the first-type task from an execution process of the second-type task, thereby ensuring security of the tasks of different security levels in execution processes. To be specific, this application may provide hardware-level isolation for the tasks of different security levels that are simultaneously executed in a same accelerator.

Optionally, the first identifier and the second identifier may be represented by a non-security bit (Non-security bit, NS bit). For example, the first identifier is 0, and the second identifier is 1.

The security level indicated by the first identifier is higher than the security level indicated by the second identifier.

Specifically, the reading a first identifier carried in the first-type task, and delivering the first-type task to the first-type acceleration unit based on the first identifier includes: The AI controller 122 reads a first identifier carried in each task in the first-type task, and based on the security level of the first-type task indicated by the first identifier (that is, whether the first-type task is delivered by the processor 110 in the first execution environment or the second execution environment), when the first identifier indicates that the first-type task is delivered by the processor 110 in the first execution environment, delivers the first-type task to the first-type acceleration unit based on the configuration information stored in the AI controller 122.

Similarly, the reading a second identifier carried in the second-type task, and delivering the second-type task to the second-type acceleration unit based on the second identifier specifically includes: The AI controller 122 reads a second identifier carried in each task in the second-type task, and based on the security level of the second-type task indicated by the second identifier (that is, whether the second-type task is delivered by the processor 110 in the first execution environment or the second execution environment), when the second identifier indicates that the second-type task is delivered by the processor 110 in the first execution environment, delivers the second-type task to the second-type acceleration unit based on the configuration information stored in the AI controller 122.

Optionally, the AI control apparatus 120, the processor 110, and the AI accelerator 130 are integrated into a same system-on-chip SoC, the AI control apparatus 120 and the processor 110 are connected through the bus 140, and the AI control apparatus 120 and the AI accelerator 130 are connected through the bus 140.

It should be understood that a connection manner among the AI control apparatus 120, the processor 110, and the AI accelerator 130 is merely a specific example provided in this application. This is not limited in this application. For example, the AI control apparatus 120 may alternatively be integrated into the processor 110, to implement functions in the foregoing embodiments and the following embodiments.

Optionally, the bus between the processor 110 and the AI control apparatus 120 and the bus between the AI accelerator 130 and the AI control apparatus 120 may be one bus or two independent buses, as shown in FIG. 1a and FIG. 1b respectively. This is not limited in this application.

Optionally, the bus in this embodiment of this application is a bus that is available for transmission of the security identifier, the first identifier, and the second identifier (for example, a non-security bit NS bit) in the foregoing embodiment, for example, a data bus or an address bus. A specific type of the bus is not limited in this application. Details are not listed one by one herein either.

Optionally, the AI controller 122 is specifically configured to: receive, through the bus 140, the first-type task and the second-type task that are delivered by the processor; and distribute the first-type task to the first-type acceleration unit and distribute the second-type task to the second-type acceleration unit through the bus 140.

In terms of technical effects, in this application, the processor, the AI controller, and the AI accelerator are integrated into the semiconductor chip. Compared with the conventional technology in which a communication manner in which an open interconnection network is used, communication overheads between hardware modules can be effectively reduced. In addition, communication between the processor and the AI controller and communication between the AI controller and the AI accelerator are implemented respectively through the two independent buses, so that a process in which the processor bypasses the AI controller and directly controls the AI accelerator to execute an acceleration task can be avoided. To be specific, in this case, the task delivered by the processor needs to be distributed to the acceleration unit in the AI accelerator according to the task distribution logic of the AI controller. It can be learned from the foregoing embodiment that the tasks of different security levels in execution processes in the AI accelerator can be effectively isolated.

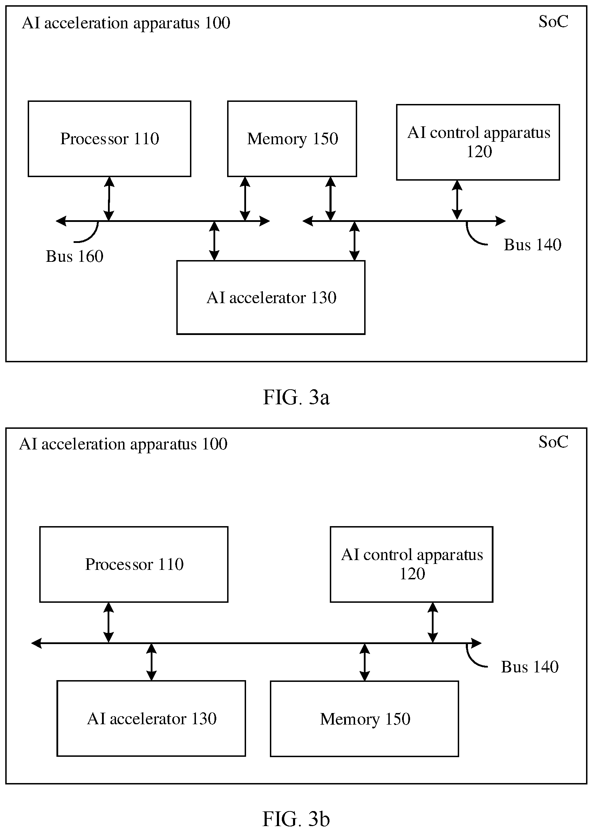

FIG. 3a and FIG. 3b are diagrams of structures of another AI acceleration apparatus according to an embodiment of this application. In addition to the processor 110, the AI control apparatus 120, the AI accelerator 130, and the bus 140 in FIG. 1a and FIG. 1b, an AI acceleration apparatus 100 further includes a memory 150. The processor 110, the AI control apparatus 120, the AI accelerator 130, and the memory 150 may be jointly integrated into a same system-on-chip SoC. The memory 150 is configured to store computing data that needs to be used by the AI accelerator 130 in processes of executing the first-type task and the second-type task.

Optionally, the memory, the AI control apparatus, the processor, and the AI accelerator are connected through one bus; or the memory, the AI control apparatus, and the processor are connected through a first bus, and the memory, the AI control apparatus, and the AI accelerator are connected through a second bus.

Specifically, the following separately describes two connection manners of the memory 150 with reference to FIG. 3a and FIG. 3b. The two connection manners correspond to FIG. 1a and FIG. 1b respectively. In FIG. 3a, the processor 110 and the AI control apparatus 120 are connected through a bus 160 (namely, the first bus), and the AI control apparatus 120 and the AI accelerator 130 are connected through the bus 140 (namely, the second bus). The memory 150 is separately connected to the bus 160 and the bus 140, to implement connections to the processor 110, the AI control apparatus 120, and the AI accelerator 130. In other words, FIG. 3a shows an extension of the AI acceleration apparatus 100 in FIG. 1a. In FIG. 3b, the processor 110, the AI control apparatus 120, and the AI accelerator 130 are connected through the bus 140, and the memory 150 is connected to the bus 140, to implement communication with the processor 110, the AI control apparatus 120, and the AI accelerator 130.

The memory 150 is a writable and readable storage unit, for example, a register or a random access memory (random access memory, RAM), for example, a static random access memory (static random access memory, SRAM), a dynamic random access memory (dynamic random access memory, DRAM), a synchronous dynamic random access memory (synchronous DRAM, SDRAM), or a dual data rate SDRAM (dual data rate SDRAM, DDR SDRAM).

Optionally, the memory 150 is connected to the AI control apparatus 120, the AI accelerator 130, and the processor 110 through the bus 140.

Optionally, the AI controller 122 is further configured to configure a first storage area and a second storage area in the memory 150, where the first storage area is used to store computing data corresponding to the first-type task, and the second storage area is used to store computing data corresponding to the second-type task.

In terms of technical effects, computing data corresponding to tasks of different security levels is stored in secure areas of different levels in the memory, so that data access processes are isolated when the tasks of different security levels are executed. This avoids accessing data corresponding to a task with a high security level when the second-type task with a low security level is executed, thereby ensuring data security.

Optionally, the configuration information in the configuration instruction further includes first address information and second address information. The first address information indicates the first storage area in the memory 150, and the second address information indicates the second storage area in the memory 150.

Specifically, after receiving the configuration instruction delivered by the processor 110, the AI controller 122 first reads the security identifier in the configuration instruction, and identifies the security identifier. When the security identifier indicates that the configuration instruction is delivered by the processor 110 in the first execution environment, the AI controller 122 identifies that the configuration instruction is secure, and configures the first storage area and the second storage area in the memory 150 based on the first address information and the second address information in the configuration information. A security level of the first storage area is higher than a security level of the second storage area. The first storage area is used to store data required in an execution process of each task in the first-type task, and the second storage area is used to store data required by each task in the second-type task.

It should be noted that the configuration information not only includes the configuration information (indicating a quantity of types of different security levels for the acceleration units and a specific quantity of acceleration units included in total at each type of security level) for the AI accelerator 130, but also includes configuration information (namely, the first address information and the second address information) for the memory 150.

Optionally, the first storage area and the second storage area may constitute all or some of storage space of the memory 150. This is not limited in this application.

Optionally, the first storage area includes a first task queue, and the second storage area includes a second task queue; and the AI controller 122 is further configured to: store the first-type task in the first task queue based on receiving time of the first-type task, and store the second-type task in the second task queue based on receiving time of the second-type task. A first-type task with earlier receiving time is ranked higher in the first task queue, and is distributed to the first-type acceleration unit earlier, and a second-type task with earlier receiving time is ranked higher in the second task queue, and is distributed to the second-type acceleration unit earlier.

Specifically, the AI controller 122 establishes the first task queue in the first storage area in the memory 150, and establishes the second task queue in the second storage area; and then, stores the first-type task in the first task queue based on the receiving time of the first-type task, and stores the second-type task in the second task queue based on the receiving time of the second-type task.

Optionally, after establishing the first task queue and the second task queue, the AI controller 122 maintains the first task queue and the second task queue based on a first-in first-out principle: Compared with a first-type task that is received later, a first-type task that is received earlier is ranked higher in the first task queue; and compared with a first-type task that is ranked lower in the first task queue, a first-type task that is ranked higher in the first task queue is first distributed by the AI controller 122 to the AI accelerator 130. A maintenance rule for the second task queue is the same as the maintenance rule for the first task, and details are not described herein again.

The first task queue is used as an example. The processor 110 delivers K first-type tasks to the AI controller 122 in the first execution environment. The AI controller 122 distributes O first-type tasks to the first-type acceleration unit based on a computing capability of the first-type acceleration unit in the AI accelerator 130, so that the O first-type tasks are concurrently executed in the first-type acceleration unit. Then, the AI controller 122 stores, in the first task queue based on receiving time of remaining first-type tasks other than the O first-type tasks in the K first-type tasks. When an acceleration unit in the first-type acceleration unit is idle, a first-type task that is ranked higher in the first task queue is first delivered to the idle acceleration unit. Similarly, for a specific process of maintaining the second task queue by the AI controller 122, refer to the foregoing process of maintaining the first queue. Details are not described herein again.

The first-type task includes a first task, the second-type task includes a second task, the first task is any task in the first-type task, and the second task is any task in the second-type task.

In terms of technical effects, based on a security level of a task, the first task queue and the second task queue are maintained respectively in the first storage area and the second storage area, to implement isolation of delivery processes of the tasks of different security levels. In addition, a task is delivered based on queues. The task may be distributed when an acceleration unit is idle, and the task is stored in a queue when no acceleration unit is idle. This uses a computing capability of each acceleration unit to a maximum extent, thereby improving computing performance.

The following specifically describes a process in which the first-type acceleration unit and a second acceleration unit accesses the memory 150 when the first-type acceleration unit executes the first task and the second acceleration unit executes the second task. The first-type acceleration unit and the second-type acceleration unit may access the memory in a manner using a virtual address or a physical address.

### (1) Access using a virtual address

Optionally, the first-type task includes a first task, the second-type task includes a second task, the first task corresponds to a first virtual address, and the second task corresponds to a second virtual address. The first-type acceleration unit is configured to perform data access to the first storage area based on the first virtual address and a first page table. The second-type acceleration unit is configured to perform data access to the second storage area based on the second virtual address and a second page table.

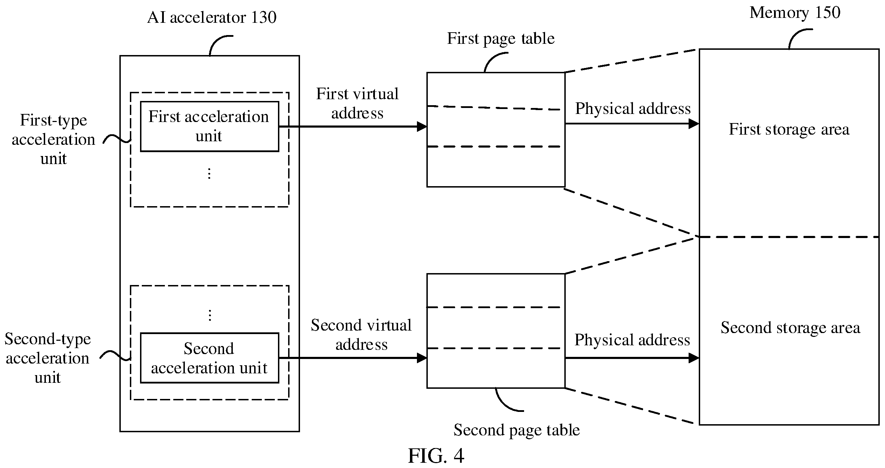

With reference to FIG. 4, the following specifically describes a process in which the acceleration unit accesses the memory 150 based on the virtual address. As shown in FIG. 4, in a process of executing the first task, a first acceleration unit in the first-type acceleration unit queries the first page table for a physical address corresponding to the first virtual address, and then accesses a corresponding location in the first storage area based on the physical address. Similarly, in a process of executing the second task, a second acceleration unit in the second-type acceleration unit queries the second page table for a physical address corresponding to the second virtual address, and then accesses a corresponding location in the second storage area based on the physical address.

The first acceleration unit may be any acceleration unit in the first-type acceleration unit, and the second acceleration unit may be any acceleration unit in the second-type acceleration unit.

It can be learned that, in the process of accessing the memory based on the virtual address, the first-type acceleration unit and the second-type acceleration unit perform address translation respectively based on two different page tables (namely, the first page table and the second page table). The physical address obtained through translation based on the first page table is located in the first storage area, and the physical address obtained through translation based on the second page table is located in the second storage area. Storage areas of two different security levels are configured in the memory 150, and then virtual address translation is performed separately based on the two different page tables. This ensures that acceleration units of different security levels are isolated from each other in a process of accessing data in the memory 150, thereby improving security of the first-type task in an execution process.

It should be noted that division of the storage areas in the memory 150 shown in FIG. 4 is merely a specific example provided in this application. The first storage area and the second storage area may constitute only some of storage areas in the memory 150. This is not limited in this application.

### (2) Access using a physical address

Optionally, the first-type task includes a first task, the second-type task includes a second task, the first task corresponds to a first physical address, and the second task corresponds to a second physical address. When the first physical address is located in the first storage area, the first-type acceleration unit has permission to access the first storage area. When the second physical address is located in the second storage area, the second-type acceleration unit has permission to access the second storage area.

Specifically, an access request sent by a first acceleration unit in the first-type acceleration unit includes the first physical address and the first identifier, and the first identifier indicates a security level of the access request. The memory 150 determines whether the security level that is of the first acceleration unit and that is indicated by the first identifier corresponds to a security level of the storage area in which the first physical address is located, to determine whether to allow the first acceleration unit to access a corresponding storage area in the memory 150 based on the first physical address. When the first identifier indicates that the first acceleration unit is a first-type acceleration unit, and the first physical address is located in the first storage area, the first acceleration unit has permission to access an area indicated by the first physical address in the first storage area. When the first identifier indicates that the first acceleration unit is a first-type acceleration unit, but the first physical address is not located in the first storage area, a request for accessing the first storage area by the first acceleration unit is limited. Similarly, an access request sent by a second acceleration unit includes the second physical address and the second identifier. For a process in which the second acceleration unit accesses the memory 150 based on the second identifier and the second physical address, refer to the access process of the first acceleration unit. Details are not described herein again.

In terms of technical effects, when data access is performed based on a physical address, whether data access is allowed is determined by determining whether a security level of a storage area in which the physical address is located corresponds to a security level of an access task, so as to ensure that only the first storage area is accessed in an execution process of the first-type task, and only the second storage area is accessed in an execution process of the second-type task, thereby implementing isolation of the access processes when data access is performed based on the physical address.

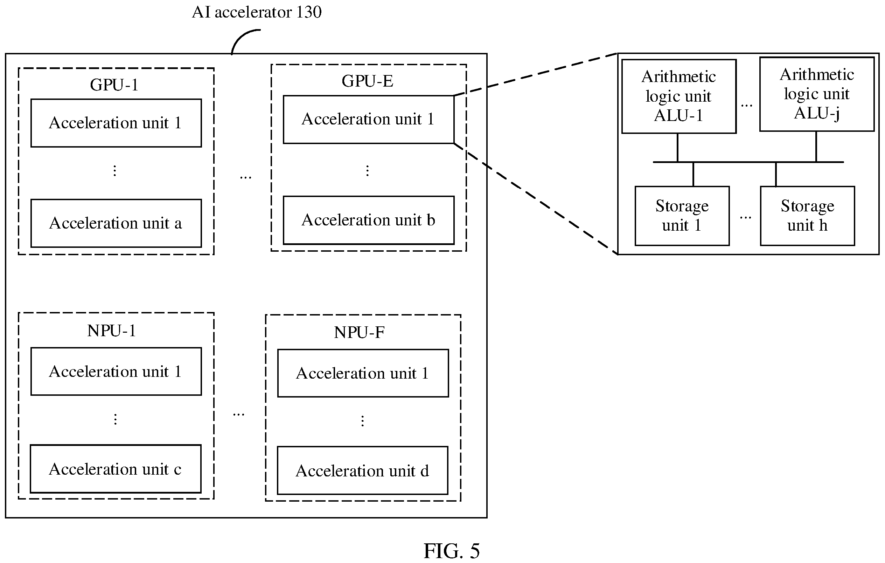

FIG. 5 is a diagram of a structure of an AI accelerator according to an embodiment of this application. As shown in FIG. 5, an AI accelerator 130 may include at least one GPU (GPU-1, ..., and GPU-E) and/or at least one NPU (NPU-1, ..., and NPU-F). The GPU-1 includes at least one acceleration unit: an acceleration unit 1, ..., and an acceleration unit a. The GPU-E includes at least one acceleration unit: an acceleration unit 1, ..., and an acceleration unit b. The NPU-1 includes at least one acceleration unit: an acceleration unit 1, ..., and an acceleration unit c. The NPU-F includes at least one acceleration unit: an acceleration unit 1, ..., and an acceleration unit d. E, F, a, b, c, and d are positive integers.

Each acceleration unit in the AI accelerator 130 may include at least one arithmetic logic unit ALU and at least one storage unit. For example, the acceleration unit 1 in the GPU-E in FIG. 5 includes an arithmetic logic unit ALU-1, ..., an arithmetic logic unit ALU-j, a storage unit 1, ..., and a storage unit h. It should be understood that specific hardware compositions of the acceleration units in the AI accelerator 130 may be different, and may be adapted based on a specific task requirement.

Optionally, the storage unit included in each acceleration unit in the AI accelerator 130 is a readable and writable storage unit, for example, a register. This is not limited in this application.

Optionally, the N acceleration units include a third acceleration unit; and when the third acceleration unit is configured as the second-type acceleration unit from the first-type acceleration unit, or is configured as the first-type acceleration unit from the second-type acceleration unit, data cached in the third acceleration unit is cleared.

The third acceleration unit may be any acceleration unit in the AI accelerator 130.

Specifically, in a process in which the AI controller 122 receives an indication from the processor 110 to configure a security level of each acceleration unit in the AI accelerator 130, if a security level of the third acceleration unit changes, that is, the third acceleration unit changes from the first-type acceleration unit to the second-type acceleration unit or from the second-type acceleration unit to the first-type acceleration unit, data cached in a storage unit in the third acceleration unit is cleared, to ensure data security.

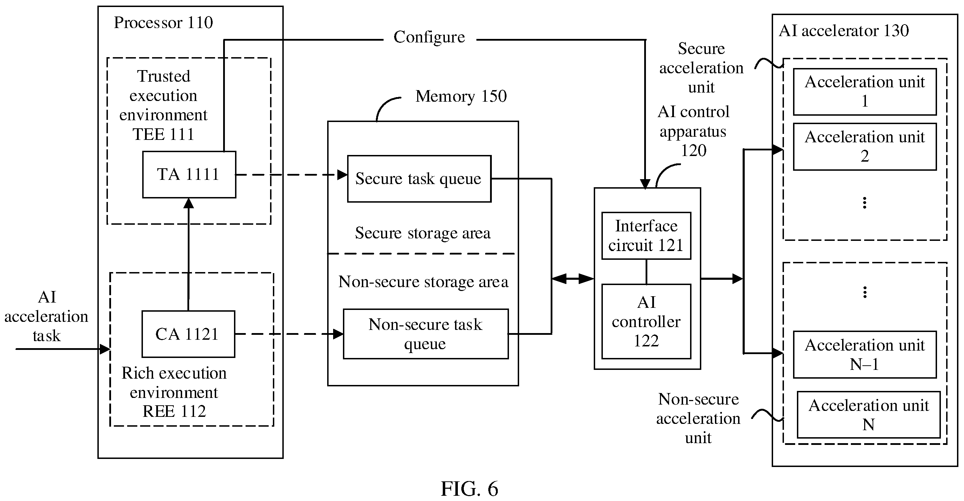

FIG. 6 shows a specific example of a task execution process of an AI acceleration apparatus according to an embodiment of this application. It should be understood that the example is merely an example of an execution process of an AI acceleration apparatus 100, and does not constitute any specific limitation.

As shown in FIG. 6, two mutually isolated execution environments are run on a processor 110: a trusted execution environment TEE 111 and a rich execution environment REE 112. A trusted application (Trusted Application, TA) 1111 runs in the TEE 111, and a client application (Client Application, CA) 1112 runs in the REE 112. First, a user may set corresponding configuration information depending on a specific application scenario (for example, image processing or voice and semantic processing), and deliver the configuration information to an AI control apparatus 120 in a TEE. The AI control apparatus 120 configures acceleration units in an AI accelerator 130 as a secure acceleration unit and a non-secure acceleration unit (which correspond respectively to the first-type acceleration unit and the second-type acceleration unit in the foregoing embodiments) based on the configuration information, and configures a secure storage area and a non-secure storage area (which correspond respectively to the first storage area and the second storage area in the foregoing embodiments) for a memory 150.

After the processor 110 in the AI acceleration apparatus receives a specific AI acceleration task, the processor 110 decomposes, in the REE 112, the AI acceleration task into two types of subtasks of different security levels: a secure task and a non-secure task. The non-secure task is delivered to the AI control apparatus 120 by the CA 1121, and an AI controller 122 in the AI control apparatus 120 maintains a non-secure task queue (corresponding to the second task queue in the foregoing embodiments) in the non-secure storage area, and delivers the non-secure task to the non-secure acceleration unit in the AI accelerator 130 according to a sequence in the non-secure task queue. The secure task is transmitted to the TA 1111 in the TEE 111 by the CA 1121, the TA 1111 delivers the secure task to the AI control apparatus 120, and the AI controller 122 maintains a secure task queue (corresponding to the first task queue in the foregoing embodiments) in the secure storage area, and delivers the secure task to the secure acceleration unit in the AI accelerator 130 according to a sequence in the secure task queue.

After receiving a specific task, each acceleration unit in the AI accelerator 130 starts to correspondingly execute a correspondingly delivered task, and performs data access to the memory 150 in a task execution process according to the rule described in the foregoing embodiments.

It should be understood that, for a specific task execution process of the AI acceleration apparatus in the embodiment in FIG. 6, refer to the foregoing embodiments. Details are not described herein again.

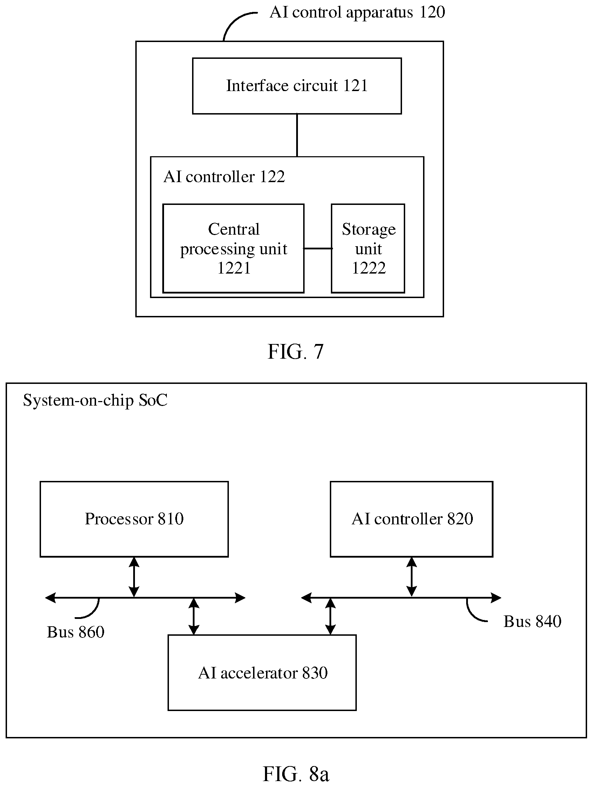

FIG. 7 is a diagram of a structure of an AI control apparatus according to an embodiment of this application. This is a supplementary description of a structure of the AI control apparatus 120 in the foregoing embodiments.

As shown in FIG. 7, an AI control apparatus 120 includes an interface circuit 121 and an AI controller 122. The AI controller 122 includes a central processing unit 1221 and a storage unit 1222.

Optionally, the storage unit 1222 is a readable and writable storage unit, for example, a register. This is not limited in this application.

It should be understood that the AI control apparatus 120 shown in FIG. 7 is merely a feasible example, and does not constitute a limitation on a quantity of central processing units 1221 and a quantity of storage units 1222. To be specific, the AI controller 122 may include at least one central processing unit 1221 and at least one storage unit 1222.

Optionally, the AI control apparatus 120 may alternatively be a hardware circuit having the functions described in the foregoing embodiments. This is not limited in this application.

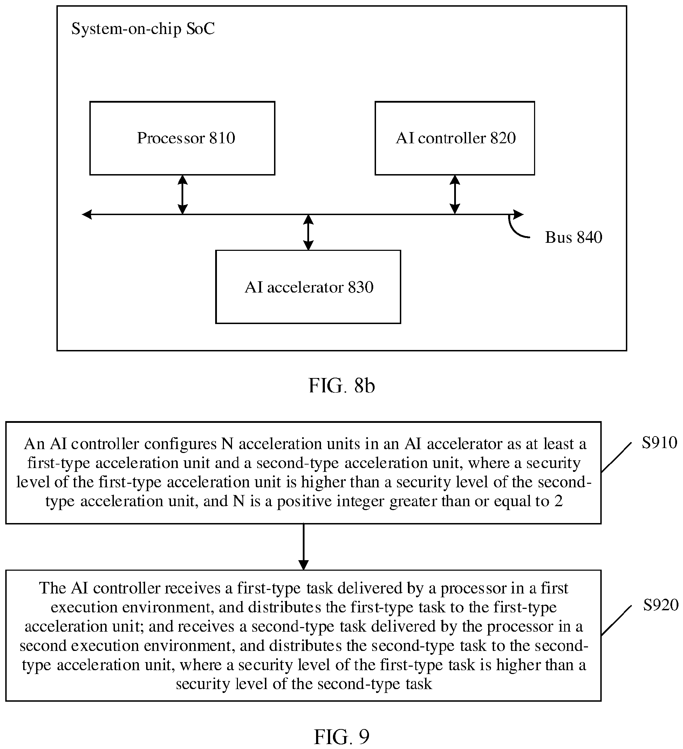

FIG. 8a and FIG. 8b are diagrams of structures of two systems-on-chip according to an embodiment of this application. As shown in FIG. 8a, the system-on-chip includes a processor 810, an AI controller 820, an AI accelerator 830, a bus 840, and a bus 860. The processor 810 and the AI controller 820 are connected through the bus 860, the AI controller 820 and the AI accelerator 130 are connected through the bus 840, and the bus 860 and the bus 840 are two independent buses.

A difference between FIG. 8b and FIG. 8a lies in different connection manners between modules. In the system-on-chip shown in FIG. 8b, a processor 810, an AI controller 820, and an AI accelerator 830 are connected through a bus 840. In addition, a task execution process of the system-on-chip shown in FIG. 8b is the same as that of the system-on-chip shown in FIG. 8a.

The systems-on-chip in FIG. 8a and FIG. 8b are configured to perform an AI acceleration method shown in FIG. 9 and related feasible implementations.

FIG. 9 is a schematic flowchart of an AI acceleration method according to an embodiment of this application. As shown in FIG. 9, the method includes step S910 and step S920.

S910: An AI controller configures N acceleration units in an AI accelerator as at least a first-type acceleration unit and a second-type acceleration unit, where a security level of the first-type acceleration unit is higher than a security level of the second-type acceleration unit, and N is a positive integer greater than or equal to 2.

S920: The AI controller receives a first-type task delivered by a processor in a first execution environment, and distributes the first-type task to the first-type acceleration unit; and receives a second-type task delivered by the processor in a second execution environment, and distributes the second-type task to the second-type acceleration unit, where a security level of the first-type task is higher than a security level of the second-type task.

In a feasible implementation, that an AI controller configures N acceleration units in an AI accelerator as at least a first-type acceleration unit and a second-type acceleration unit includes: The AI controller receives a configuration instruction delivered by the processor, where the configuration instruction includes a security identifier and configuration information; and configures the N acceleration units as at least the first-type acceleration unit and the second-type acceleration unit based on the configuration information when the security identifier indicates that the configuration instruction is delivered by the processor in the first execution environment.

In a feasible implementation, the distributing the first-type task to the first-type acceleration unit includes: The AI controller reads a first identifier carried in the first-type task, and delivers the first-type task to the first-type acceleration unit based on the first identifier. The distributing the second-type task to the second-type acceleration unit includes: The AI controller reads a second identifier carried in the second-type task, and delivers the second-type task to the second-type acceleration unit based on the second identifier. The first identifier indicates the security level of the first-type task, and the second identifier indicates the security level of the second-type task.

In a feasible implementation, the AI controller, the processor, and the AI accelerator are integrated into a same system-on-chip SoC, the AI controller and the processor are connected through a bus, and the AI controller and the AI accelerator are connected through a bus.

In a feasible implementation, that the AI controller receives a first-type task delivered by a processor in a first execution environment, and distributes the first-type task to the first-type acceleration unit; and receives a second-type task delivered by the processor in a second execution environment, and distributes the second-type task to the second-type acceleration unit includes: The AI controller receives, through the bus, the first-type task and the second-type task that are delivered by the processor; and distributes the first-type task to the first-type acceleration unit and distributes the second-type task to the second-type acceleration unit through the bus.

In a feasible implementation, the method further includes: The AI controller configures a first storage area and a second storage area in a memory, where the first storage area is used to store computing data corresponding to the first-type task, and the second storage area is used to store computing data corresponding to the second-type task.

In a feasible implementation, the memory, the AI controller, the processor, and the AI accelerator are connected through one bus; or the memory, the AI controller, and the processor are connected through a first bus, and the memory, the AI controller, and the AI accelerator are connected through a second bus.

In a feasible implementation, the first storage area includes a first task queue, and the second storage area includes a second task queue; and the method further includes: The AI controller stores the first-type task in the first task queue based on receiving time of the first-type task, and stores the second-type task in the second task queue based on receiving time of the second-type task. A first-type task with earlier receiving time is ranked higher in the first task queue, and is distributed to the first-type acceleration unit earlier, and a second-type task with earlier receiving time is ranked higher in the second task queue, and is distributed to the second-type acceleration unit earlier.

In a feasible implementation, the first-type task includes a first task, the second-type task includes a second task, the first task corresponds to a first virtual address, and the second task corresponds to a second virtual address; the first-type acceleration unit performs data access to the first storage area based on the first virtual address and a first page table; and the second-type acceleration unit performs data access to the second storage area based on the second virtual address and a second page table.

In a feasible implementation, the first-type task includes a first task, the second-type task includes a second task, the first task corresponds to a first physical address, and the second task corresponds to a second physical address; when the first physical address is located in the first storage area, the first-type acceleration unit is allowed to access the first storage area; and when the second physical address is located in the second storage area, the second-type acceleration unit is allowed to access the second storage area.

In a feasible implementation, the N acceleration units include a third acceleration unit; and when the third acceleration unit is configured as the second-type acceleration unit from the first-type acceleration unit, or is configured as the first-type acceleration unit from the second-type acceleration unit, data cached in the third acceleration unit is cleared.

In a feasible implementation, the first execution environment is a trusted execution environment TEE, and the second execution environment is a rich execution environment REE.

It should be understood that a specific process of the AI acceleration method in the foregoing method embodiment is correspondingly the same as the process in the foregoing apparatus embodiments, and details are not described herein again.

An embodiment of this application provides a computer device, where the computer device includes at least one processor and an interface circuit; and the at least one processor is configured to invoke instructions stored in a memory, to perform the method according to any one of the feasible implementations in the embodiment in FIG. 9.

An embodiment of this application provides a computer-readable storage medium. The computer-readable storage medium stores a computer program. When the computer program is executed, the method according to any one of the feasible implementations in the embodiment in FIG. 9 is implemented.

An embodiment of this application provides a computer program. The computer program includes instructions. When the computer program is executed, the method according to any one of the feasible implementations in the embodiment in FIG. 9 is implemented.

In the foregoing embodiments, the description of each embodiment has respective focuses. For a part that is not described in detail in an embodiment, refer to related descriptions in another embodiment. It should be noted that, for brief description, the foregoing method embodiments are represented as a combination of a series of actions. However, a person skilled in the art should appreciate that this application is not limited to the described order of the actions, because some steps may be performed in other orders or simultaneously according to this application. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the foregoing described apparatus embodiments are merely examples. For example, division of the units is merely a logical function division and may be another division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic or other forms.

The units described as separate components may or may not be physically separate, and components displayed as units may or may not be physical units. To be specific, the components may be located at one location, or may be distributed on a plurality of network units. Some or all of the units may be selected based on actual requirements to achieve the objectives of the solutions of embodiments.

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the spirit and scope of the technical solutions of embodiments of this application.

## Claims

1. An artificial intelligence AI control apparatus, wherein the AI control apparatus comprises an AI controller and an interface circuit, wherein
the AI controller is configured to configure N acceleration units in an AI accelerator as at least a first-type acceleration unit and a second-type acceleration unit, wherein a security level of the first-type acceleration unit is higher than a security level of the second-type acceleration unit, and N is a positive integer greater than or equal to 2; and
the AI controller is further configured to: receive, through the interface circuit, a first-type task delivered by a processor in a first execution environment, and distribute the first-type task to the first-type acceleration unit; and receive a second-type task delivered by the processor in a second execution environment, and distribute the second-type task to the second-type acceleration unit, wherein a security level of the first-type task is higher than a security level of the second-type task.

2. The AI control apparatus according to claim 1, wherein the AI controller is specifically configured to:
receive a configuration instruction delivered by the processor, wherein the configuration instruction comprises a security identifier and configuration information; and
configure the N acceleration units as at least the first-type acceleration unit and the second-type acceleration unit based on the configuration information when the security identifier indicates that the configuration instruction is delivered by the processor in the first execution environment.

3. The AI control apparatus according to claim 1 or 2, wherein the AI controller is specifically configured to:
read a first identifier carried in the first-type task, and deliver the first-type task to the first-type acceleration unit based on the first identifier; and
read a second identifier carried in the second-type task, and deliver the second-type task to the second-type acceleration unit based on the second identifier, wherein
the first identifier indicates the security level of the first-type task, and the second identifier indicates the security level of the second-type task.

4. The AI control apparatus according to any one of claims 1 to 3, wherein the AI control apparatus, the processor, and the AI accelerator are integrated into a same system-on-chip SoC, the AI control apparatus and the processor are connected through a bus, and the AI control apparatus and the AI accelerator are connected through a bus.

5. The AI control apparatus according to claim 4, wherein the AI controller is specifically configured to:
receive, through the bus, the first-type task and the second-type task that are delivered by the processor; and
distribute the first-type task to the first-type acceleration unit and distribute the second-type task to the second-type acceleration unit through the bus.

6. The AI control apparatus according to any one of claims 1 to 5, wherein the AI controller is further configured to:
configure a first storage area and a second storage area in a memory, wherein the first storage area is used to store computing data corresponding to the first-type task, and the second storage area is used to store computing data corresponding to the second-type task.

7. The AI control apparatus according to claim 6, wherein the AI control apparatus, the memory, the AI accelerator, and the processor are integrated into the same system-on-chip SoC; and
the memory, the AI control apparatus, the processor, and the AI accelerator are connected through one bus; or the memory, the AI controller, and the processor are connected through a first bus, and the memory, the AI control apparatus, and the AI accelerator are connected through a second bus.

8. The AI control apparatus according to claim 6 or 7, wherein the first storage area comprises a first task queue, and the second storage area comprises a second task queue; and the AI controller is further configured to:
store the first-type task in the first task queue based on receiving time of the first-type task, and store the second-type task in the second task queue based on receiving time of the second-type task, wherein
a first-type task with earlier receiving time is ranked higher in the first task queue, and is distributed to the first-type acceleration unit earlier, and a second-type task with earlier receiving time is ranked higher in the second task queue, and is distributed to the second-type acceleration unit earlier.

9. The AI control apparatus according to any one of claims 6 to 8, wherein the first-type task comprises a first task, the second-type task comprises a second task, the first task corresponds to a first virtual address, and the second task corresponds to a second virtual address;
the first-type acceleration unit is configured to perform data access to the first storage area based on the first virtual address and a first page table; and
the second-type acceleration unit is configured to perform data access to the second storage area based on the second virtual address and a second page table.

10. The AI control apparatus according to any one of claims 6 to 8, wherein the first-type task comprises a first task, the second-type task comprises a second task, the first task corresponds to a first physical address, and the second task corresponds to a second physical address;
when the first physical address is located in the first storage area, the first-type acceleration unit has permission to access the first storage area; and
when the second physical address is located in the second storage area, the second-type acceleration unit has permission to access the second storage area.

11. The AI control apparatus according to any one of claims 1 to 10, wherein the N acceleration units comprise a third acceleration unit; and
when the third acceleration unit is configured as the second-type acceleration unit from the first-type acceleration unit, or is configured as the first-type acceleration unit from the second-type acceleration unit, data cached in the third acceleration unit is cleared.

12. The AI control apparatus according to any one of claims 1 to 11, wherein the first execution environment is a trusted execution environment TEE, and the second execution environment is a rich execution environment REE.

13. A system-on-chip, wherein the system-on-chip comprises a processor, an AI controller, and an AI accelerator, wherein
the AI controller is configured to configure N acceleration units in the AI accelerator as at least a first-type acceleration unit and a second-type acceleration unit, wherein a security level of the first-type acceleration unit is higher than a security level of the second-type acceleration unit, and N is a positive integer greater than or equal to 2; and
the AI controller is further configured to: receive a first-type task delivered by the processor in a first execution environment, and distribute the first-type task to the first-type acceleration unit; and receive a second-type task delivered by the processor in a second execution environment, and distribute the second-type task to the second-type acceleration unit, wherein a security level of the first-type task is higher than a security level of the second-type task.

14. The system-on-chip according to claim 13, wherein the AI controller is specifically configured to:
receive a configuration instruction delivered by the processor, wherein the configuration instruction comprises a security identifier and configuration information; and
configure the N acceleration units as at least the first-type acceleration unit and the second-type acceleration unit based on the configuration information when the security identifier indicates that the configuration instruction is delivered by the processor in the first execution environment.

15. The system-on-chip according to claim 13 or 14, wherein the system-on-chip further comprises a memory; and the AI controller is further configured to:
configure a first storage area and a second storage area in the memory, wherein the first storage area is used to store computing data corresponding to the first-type task, and the second storage area is used to store computing data corresponding to the second-type task.

16. The system-on-chip according to claim 15, wherein the first-type task comprises a first task, the second-type task comprises a second task, the first task corresponds to a first virtual address, and the second task corresponds to a second virtual address;
the first-type acceleration unit is configured to perform data access to the first storage area based on the first virtual address and a first page table; and
the second-type acceleration unit is configured to perform data access to the second storage area based on the second virtual address and a second page table.

17. The system-on-chip according to claim 15, wherein the first-type task comprises a first task, the second-type task comprises a second task, the first task corresponds to a first physical address, and the second task corresponds to a second physical address;
when the first physical address is located in the first storage area, the first-type acceleration unit has permission to access the first storage area; and
when the second physical address is located in the second storage area, the second-type acceleration unit has permission to access the second storage area.

18. An artificial intelligence AI acceleration method, wherein the method comprises:
configuring, by an AI controller, N acceleration units in an AI accelerator as at least a first-type acceleration unit and a second-type acceleration unit, wherein a security level of the first-type acceleration unit is higher than a security level of the second-type acceleration unit, and N is a positive integer greater than or equal to 2; and
receiving, by the AI controller, a first-type task delivered by a processor in a first execution environment, and distributing the first-type task to the first-type acceleration unit; and receiving a second-type task delivered by the processor in a second execution environment, and distributing the second-type task to the second-type acceleration unit, wherein a security level of the first-type task is higher than a security level of the second-type task.

19. The method according to claim 18, wherein the configuring, by an AI controller, N acceleration units in an AI accelerator as at least a first-type acceleration unit and a second-type acceleration unit comprises:
receiving, by the AI controller, a configuration instruction delivered by the processor, wherein the configuration instruction comprises a security identifier and configuration information; and
configuring the N acceleration units as at least the first-type acceleration unit and the second-type acceleration unit based on the configuration information when the security identifier indicates that the configuration instruction is delivered by the processor in the first execution environment.

20. The method according to claim 18 or 19, wherein
the distributing the first-type task to the first-type acceleration unit comprises: reading, by the AI controller, a first identifier carried in the first-type task, and delivering the first-type task to the first-type acceleration unit based on the first identifier; and
the distributing the second-type task to the second-type acceleration unit comprises: reading, by the AI controller, a second identifier carried in the second-type task, and delivering the second-type task to the second-type acceleration unit based on the second identifier, wherein
the first identifier indicates the security level of the first-type task, and the second identifier indicates the security level of the second-type task.

21. The method according to any one of claims 18 to 20, wherein the AI controller, the processor, and the AI accelerator are integrated into a same system-on-chip SoC, the AI controller and the processor are connected through a bus, and the AI controller and the AI accelerator are connected through a bus.

22. The method according to claim 21, wherein the receiving, by the AI controller, a first-type task delivered by a processor in a first execution environment, and distributing the first-type task to the first-type acceleration unit; and receiving a second-type task delivered by the processor in a second execution environment, and distributing the second-type task to the second-type acceleration unit comprises:
receiving, by the AI controller through the bus, the first-type task and the second-type task that are delivered by the processor; and
distributing the first-type task to the first-type acceleration unit and distributing the second-type task to the second-type acceleration unit through the bus.

23. The method according to any one of claims 18 to 22, wherein the method further comprises:
configuring, by the AI controller, a first storage area and a second storage area in a memory, wherein the first storage area is used to store computing data corresponding to the first-type task, and the second storage area is used to store computing data corresponding to the second-type task.

24. The method according to claim 23, wherein the AI controller, the memory, the AI accelerator, and the processor are integrated into the same system-on-chip SoC; and
the memory, the AI controller, the processor, and the AI accelerator are connected through one bus; or the memory, the AI controller, and the processor are connected through a first bus, and the memory, the AI controller, and the AI accelerator are connected through a second bus.

25. The method according to claim 23 or 24, wherein the first storage area comprises a first task queue, and the second storage area comprises a second task queue; and the method further comprises:
storing, by the AI controller, the first-type task in the first task queue based on receiving time of the first-type task, and storing the second-type task in the second task queue based on receiving time of the second-type task, wherein
a first-type task with earlier receiving time is ranked higher in the first task queue, and is distributed to the first-type acceleration unit earlier, and a second-type task with earlier receiving time is ranked higher in the second task queue, and is distributed to the second-type acceleration unit earlier.

26. The method according to any one of claims 23 to 25, wherein the first-type task comprises a first task, the second-type task comprises a second task, the first task corresponds to a first virtual address, and the second task corresponds to a second virtual address;
the first-type acceleration unit performs data access to the first storage area based on the first virtual address and a first page table; and
the second-type acceleration unit performs data access to the second storage area based on the second virtual address and a second page table.

27. The method according to any one of claims 23 to 25, wherein the first-type task comprises a first task, the second-type task comprises a second task, the first task corresponds to a first physical address, and the second task corresponds to a second physical address;
when the first physical address is located in the first storage area, the first-type acceleration unit is allowed to access the first storage area; and
when the second physical address is located in the second storage area, the second-type acceleration unit is allowed to access the second storage area.

28. The method according to any one of claims 18 to 27, wherein the N acceleration units comprise a third acceleration unit; and
when the third acceleration unit is configured as the second-type acceleration unit from the first-type acceleration unit, or is configured as the first-type acceleration unit from the second-type acceleration unit, data cached in the third acceleration unit is cleared.

29. The method according to any one of claims 18 to 28, wherein the first execution environment is a trusted execution environment TEE, and the second execution environment is a rich execution environment REE.

30. A computer device, wherein the computer device comprises at least one processor and an interface circuit, and the at least one processor is configured to invoke instructions stored in a memory, to perform the method according to any one of claims 18 to 29.

31. A computer-readable storage medium, wherein the computer-readable storage medium stores a computer program, and when the computer program is executed, the method according to any one of claims 18 to 29 is implemented.

32. A computer program, wherein the computer program comprises instructions, and when the computer program is executed, the method according to any one of claims 18 to 29 is implemented.
